# EUROPÄISCHE PATENTSCHRIFT

(11) **EP 1 175 133 B1**
(45) Veröffentlichungstag und Bekanntmachung des Hinweises auf die Patenterteilung: **26.03.2008**
(21) Anmeldenummer: 01115348.3
(22) Anmeldetag: 26.06.2001
(51) Int. Cl.: H05K 5/00, B25J 9/16

(54) **Geräteverbund mit mindestens zwei Roboter und einem Steuerschrank**
Combination of devices with at least two robots and a control cabinet
Combinaison d'appareils comprenant au moins deux robots et une armoire de commande

(30) Priorität: 01.07.2000 DE 10032096
(43) Veröffentlichungstag der Anmeldung: 23.01.2002
(73) Patentinhaber: KUKA Roboter GmbH, 86165 Augsburg (DE)
(72) Erfinder: Hietmann, Gerhard, 86405 Herbertshofen (DE); Finsterwalder, Thomas, 86179 Augsburg (DE)
(74) Vertreter: Lempert, Jost

(56) Entgegenhaltungen:
- EP-A- 0 446 367
- EP-A- 0 523 889
- EP-A- 0 607 619
- EP-A- 0 741 506
- EP-A- 0 811 451
- JP-A- 10 029 179
- US-A- 5 317 501
- US-A- 5 539 975
- PATENT ABSTRACTS OF JAPAN vol. 1998, no. 10, 31. August 1998 (1998-08-31) -& JP 10 124121 A (FANUC LTD), 15. Mai 1998 (1998-05-15)
- ANONYMOUS: "STEUERSCHRANK KR C1 SPEZIFIKATION, KUKA ROBOTER GMBH" INTERNET ARTICLE, [Online] 22. November 1999 (1999-11-22), XP002252341 Gefunden im Internet: <URL:212.202.249.180/web/k/www.kuka-robote r.de/doku/ spezifikationen/KUKA/Spez_Schrank_KUKA.htm > [gefunden am 2003-08-22]
- ANONYMOUS: "EPSON Scara Robots Work Cell Controller SRC 500" INTERNET ARTICLE, [Online] 7. Juni 1999 (1999-06-07), XP002252342 Gefunden im Internet: <URL:http://web.archive.org/web/2001022312 5750/http://www.epson.com.tw/electronics/p roduct/procontent/src500.htm> [gefunden am 2003-08-25]
- ANONYMOUS: "Palletizer Robot User's Guide, Rev. A. Adept Technology" 31. März 1995 (1995-03-31), ADEPT TECHNOLOGY INC Absatz 2.4
- "Einsteiger-tool Robotersystem turboscara SR6/SR8 mit IQ200" 31. Dezember 1998 (1998-12-31), ROBERT BOSCH GMBH Absatz 1 - Absatz 2.3.5
- ANONYMOUS: "AdeptOne-MV / AdeptThree-MV Roboter, Betriebsanleitung, Einschliesslich Sicherheitspaket für Handbetrieb, 00841-00101, Rev. B." 30. April 1996 (1996-04-30), ADEPT TECHNOLOGY INC * Seite I - Seite XXI * * Seite 87 - Seite 102 *

## Beschreibung

Die Erfindung betrifft einen Geräteverbund mit einem ersten Roboter, mindestens einem zweiten Roboter und einem Steuerschrank nach dem Oberbegriff des Anspruchs 1.

Roboter arbeiten oft nicht isoliert, sondern gemeinsam in einem Roboterverbund. Sie können dabei im wesentlichen unabhängig voneinander arbeiten und beispielsweise gleich ausgebildete, aber verschiedene Teile in gleicher Weise bearbeiten, die ihnen von einer gemeinsamen Zuführung, beispielsweise einem Band, zugeführt werden. Oft werden Roboter aber in einem Verbund zur gemeinsamen Bearbeitung eines Werkstücks, wie beispielsweise einer Karosserie, eingesetzt, wobei sie jeweils an verschiedenen Stellen der Karosserie Schweißpunkte setzen oder sonstige Bearbeitungsschritte vornehmen. Insbesondere in diesem Falle ist es sinnvoll, die Steuerung der Arbeitsweise und des Arbeitsablaufs der Roboter aufeinander abzustimmen

Die JP 10-124121 A zeigt einen gattungsgemäßen Geräteverbund mit zwei Robotern, deren Steuerungen einem gemeinsamen Steuerschrank angeordnet sind.

Ein oder mehrerer Roboter können aber auch mit weiteren eigenständigen Geräten, Vorrichtungen oder Maschinen zusammenarbeiten. Wenn Roboter in der einen oder anderen Weise auf engem Raum in einem Verbund arbeiten, gegebenenfalls auch mit weiteren Geräten etc., so weist zumindest jedes Gerät einen eigenen Steuerschrank auf, so dass eine Vielzahl von Steuerschränken vorgesehen werden muss. Dies ist äußerst nachteilig. Teilsweise lässt sich der Steuerschrank eines Roboters nur schwierig außerhalb des Wirkbereichs eines anderen Roboters anordnen. Darüber hinaus wird die Zugänglichkeit der Arbeits- oder Wirkbereiche der Roboter, beispielsweise zur Zuführung von zu bearbeitenden Werkstücken oder dergleichen durch die Vielzahl der vorhandenen Steuerschränke behindert.

Auch weist ein einzelner Roboter oft zusätzliche Geräte wie Schweißzangen, Schrauber, Klebevorrichtungen, Sensoren oder dgl. auf, deren Steuerungen oder zugeordnete Elektroniken in eigenen von dem Steuerschrank für den Roboter unabhängigen Gehäusen untergebracht sind.

Der Erfindung liegt daher die Aufgabe zugrunde, einen gattungsgemäßen Geräteverbund der oben genannten Art unter Vermeidung der genannten Nachteile insbesondere auch hinsichtlich der Kommunikation der Geräte und in EMSkompatibler Weise zu optimieren.

Die Erfindung sieht zur Lösung der genannten Aufgabe einen gattungsgemäßen Geräteverbund mit den kennzeichnenden Merkmalen des Anspruchs 1 vor.

Der zentrale Steuerschrank enthält weitere elektronische Systeme, insbesondere Technologiesteuerungen, wie Software programmierte Steuerungen (SPS), Steuerung der Roboterzelle, beispielsweise zum Steuern des Zugangs zu dieser, Serverrechner mit Steuerungsaufgaben, aber auch Sensorrechner, Bilderkennungssysteme, eigene unterbrechungsfreie Stromversorgung, Schnittstellenmodule und ähnliche Komponenten, insbesondere direkt auf Werkstücke einwirkende Werkzeuge.

In weiterer bevorzugter Ausgestaltung kann vorgesehen sein, dass ein gemeinsamer Steuerschrank neben den für den Roboterverbund bzw. für sonstige eingeständige Gerätes erforderlichen Steuerungen weitere (ergänzende) elektronische Komponenten, wie Server, Backup-Einheiten, PLC, Schnittstelleneinheiten, redundante Ersatzsteuerungen, Technologiesteuerungen etc. für die Nutzung im Roboterverbund aufweist.

Andere erfindungsgemäße Ausgestaltungen des zentralen Steuerschranks sehen vor, dass freie Einbauplätze für weitere Komponenten vorhanden sind und dass die Integration einer durch Software speicherprogrammierbaren Steuerung in dem zentralen Steuerschrank vorgesehen ist. Schließlich kann der zentrale Steuerschrank eine gemeinsame aktive oder passive Entwärmungseinrichtung aufweisen.

Ein bevorzugter Anwendungsfall der Erfindung ist ein zentraler Steuerschrank für einen Roboterverbund, besonders wenn die einzelnen Roboter eng zusammenarbeiten.

Durch die Erfindung werden dann viele der bisher erforderlichen Steuerschränke vermieden und auf einen gemeinsamen zentralen Steuerschrank für mehrere Roboter bzw. sonstige eingeständige Geräten reduziert. Hierdurch ergibt sich ein erheblicher Platzgewinn und darüber hinaus eine Vereinfachung der Verkabelung sowie die Möglichkeit einer zentralen Wartung der im Schrank eingebauten Komponenten, da der Datenaustausch und die hierzu erforderliche Verkabelung schrankintern erfolgt.

Weitere Vorteile und Merkmale der Erfindung ergeben sich aus den Ansprüchen aus der nachfolgenden Beschreibung, in der ein Ausführungsbeispiel der Erfindung unter Bezugnahme auf die Zeichnung im einzelnen erläutert ist. Dabei zeigt:

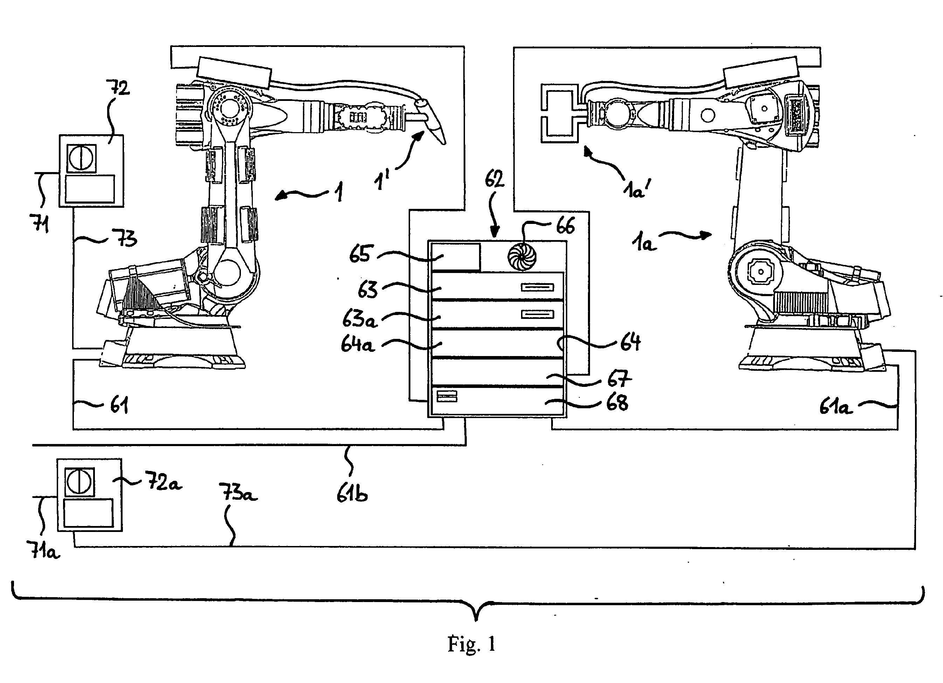

- Fig. 1: eine schematische Darstellung eines erfindungsgemäßen Roboterverbundes mit zentralem Steuerschrank bei zwei dargestellten Robotern.

Das dargestellte bevorzugte Ausführungsbeispiel zeigt einen Geräteverbund in Form eines Roboterverbundes mit mindestens zwei, in der Regel aber mehreren Robotern 1, 1a, die zusammenarbeiten, beispielsweise nacheinander an einem Werkstück, wie beispielsweise einer Kraftfahrzeugkarosserie, z.B. dort an verschiedenen Stellen Schweißpunkte anbringen bzw. Verklebung vornehmen und deren Arbeiten (Arbeitsbewegung, Arbeitsablauf) gegebenenfalls aufeinander abgestimmt sein kann, aber nicht abgestimmt sein muss. Der Roboter 1 ist dabei ein Kleberoboter mit einer Klebevorrichtung 1', während der Roboter 1' ein Schweißroboter mit einer Schweißzange 1a' ist. Grundsätzlich kommt die Erfindung auch zum Einsatz bei mehreren unabhängig arbeitenden Robotern, die jeweils auch verschiedene Werkstücke bearbeiten oder handhaben, insbesondere Werkstücke gleicher Ausgestaltung.

Demgemäß zeigt die Fig.1 zwei Roboter 1, 1a, die über Steuerleitungen 61, 61a mit einem gemeinsamen zentralen Steuerschrank 62 verbunden sind. Weitere Roboter können über Steuerleitungen, wie eine solche Steuerleitung 61b dargestellt ist, ebenfalls mit dem zentralen Steuerschrank 62 verbunden sein. Der zentrale Steuerschrank 62 weist insbesondere für jeden Roboter eine Steuerung 63, 63a, z.B. in Form eines Standard-19 Zoll-Einschubmoduls auf. Der Steuerschrank 62 kann weitere Einschubplätze 64, z.B. 19 Zoll-Einschubplätze aufweisen, von denen lediglich einer beispielhaft dargestellt ist, in die weitere elektronische Einrichtungen 64a, wie Server, Sicherungseinrichtung, Technologiesteuerung, software-speicherprogrammierte Steuerungen etc., eingesetzt werden können. Insbesondere ist es vorteilhaft, für den gesamten Steuerschrank 62, gemeinsame und damit zentrale Elemente, wie insbesondere eine unterbrechungsfreie Stromversorgung 65 (USV) und eine gemeinsame, aktive oder passive Entwärmungseinrichtung 66 vorzusehen. Der Steuerschrank 62 weist weiterhin Steuerungen 67, 68 für die Aggregate bzw. Werkzeuge 1', 1a' der Roboter auf, nämlich eine Klebesteuerung 67 für das Klebeaggregat 1' und eine Schweißsteuerung 68 für die Schweißzange 1a'.

Während, wie gesagt, die Steuerung der Roboter 1, 1a über die Steuerleitungen 61, 61a, 61b erfolgt, erfolgt die Leistungsversorgung der Roboter 1, 1a von Leistungsversorgungsleitungen 71, 71a her über jedem Roboter zugeordnete Netzanschlussboxen 72, 72a und von diesen über Leitungen 73, 73a zum jeweiligen Roboter 1, 1a.

Das beschriebene Steuerungskonzept unterstützt insbesondere die dezentrale Antriebstechnik mit Antriebseinheiten, die in oder an der Robotermechanik angeordnet sind.

## Patentansprüche

1. Geräteverbund mit einem ersten Roboter (1), mindestens einem weiteren Roboter (1a) und einem Steuerschrank, wobei im Steuerschrank (62) eine Roboter-Steuerung (63) für den ersten Roboter (1)und mindestens eine weitere Roboter-Steuerung (63a) für den insbesondere weiteren Roboter (1a) untergebracht ist, **dadurch gekennzeichnet, dass** der Steuerschrank Einschubplätze aufweist, dass jede Robotersteuerung einem Einschubplatz aufweist, dass der Steuerschrank (62) mindestens eine Schweißsteuerung, Schraubersteuerung und/oder Klebesteuerung als ein von den Robotersteuerungen (63, 63a) verschiedenes weiteres eigenständiges elektronisches System (64a, 65) in jeweils einem Einschubplatz enthält dass der zentrale Steuerschrank (62) eine zentrale Schnittstellenbaugruppe enthält und dass die Leistungsversorgung jedes Roboters (1, 1a) über eine jedem Roboter (1, 1a) eigene Netzanschlussbox (72, 72a) außerhalb des Steuerschranks von Leistungsversorgungsleitungen (71, 71a) her erfolgt.

2. Verbund nach Anspruch 1, **dadurch gekennzeichnet, dass** mindestens eine weitere elektronische Einheit, wie Server, Archivierungseinheit etc. für die gesamten im Steuerschrank enthaltene Steuerungen (63, 63a) sowie die angeschlossenen Roboter (1, 1a) vorgesehen ist.

3. Verbund nach einem der vorangehenden Ansprüche, **dadurch gekennzeichnet, dass** der zentrale Steuerschrank (62) in Standard-Einschub-Technik (19 Zoll-Einschub-Technik) ausgeführt ist.

4. Verbund nach einem der vorangehenden Ansprüche, **gekennzeichnet durch** freie Einbauplätze im zentralen Steuerschrank (62) zur Integration von weiteren Komponenten für den Geräteverbund.

5. Verbund nach einem der vorangehenden Ansprüche, **gekennzeichnet durch** die Integration einer **durch** Software speicherprogrammierbaren Steuerung in den zentralen Roboterschrank (62).

6. Verbund nach einem der vorangehenden Ansprüche, **dadurch gekennzeichnet, dass** der zentrale Steuerschrank (62) eine zentrale unterbrechungsfreie Stromversorgung (65) aufweist.

7. Verbund nach einem der vorangehenden Ansprüche, **dadurch gekennzeichnet, dass** der zentrale Steuerschrank (62) mit einer gemeinsamen aktiven oder passiven Entwärmungseinrichtung (66) versehen ist.

## Claims

1. An equipment combination comprising a first robot (1), at least one further robot (1a) and a control cabinet, the control cabinet (62) accommodating a robot control unit (63) for the first robot (1) and at least one further robot control unit (63a) for the in particular further robot (1a), **characterised in that** the control cabinet comprises rack slots, **in that** each robot control unit comprises a rack slot, **in that** the control cabinet (62) contains at least one welding control unit, screwing control unit and/or adhesive bonding control unit, each in a rack slot, as a further independent electronic system (64a, 65) different from the robot control units (63, 63a), **in that** the central control cabinet (62) contains a central interface assembly and **in that** power is supplied from power supply lines (71, 71a) to each robot (1, 1a) via a power connection box (72, 72a) dedicated to each robot (1, 1a) and located outside the control cabinet.

2. A combination according to claim 1, **characterised in that** at least one further electronic unit, such as a server, archiving unit etc., is provided for all the control units (63, 63a) contained in the control cabinet together with the connected robots (1, 1a).

3. A combination according to either one of the preceding claims, **characterised in that** the central control cabinet (62) is configured as a standard 19 inch rack system.

4. A combination according to any one of the preceding claims, **characterised by** free installation slots in the central control cabinet (62) for integrating further components for the equipment combination.

5. A combination according to any one of the preceding claims, **characterised by** the integration of a software-programmable stored-program control in the central robot cabinet (62).

6. A combination according to any one of the preceding claims, **characterised in that** the central control cabinet (62) comprises a central uninterruptible power supply (65).

7. A combination according to any one of the preceding claims, **characterised in that** the central control cabinet (62) is provided with a common active or passive heat dissipation device (66).

## Revendications

1. Machines interconnectées regroupant un premier robot (1), au moins un deuxième robot (1a) et une armoire électrique, ladite armoire électrique (62) abritant un automatisme (63) commandant le premier robot (1) et au moins un deuxième automatisme (63a) notamment pour le deuxième robot (1a), **caractérisées en ce que** l'armoire électrique présente des baies, chacun des automatismes de robot occupant une baie, **caractérisées** également **en ce que** l'armoire électrique (62) abrite sous forme d'un système électronique (641, 65) autonome différent des automatismes de robot (63, 63a) au moins un automatisme de soudage, un automatisme de vissage et/ou un automatisme de collage montés respectivement dans une baie, **caractérisées en**fin **en ce que** l'armoire électrique centrale (62) comprenne un module central d'interfaces et **en ce que** l'alimentation en puissance de chacun des robots (1, 1a) soit assurée à l'extérieur de l'armoire électrique par les lignes d'alimentation en puissance (71, 71a) par l'intermédiaire d'un coffret de raccordement au secteur (72, 72a) propre à chaque robot (1, 1a) .

2. Machines interconnectées selon la revendication 1, **caractérisées en ce qu'**au moins une unité électronique supplémentaire, tel un serveur, une unité d'archivage etc. soit prévue pour tous les automatismes (63, 63a) regroupés dans l'armoire électrique ainsi que pour les robots (1, 1a) connectés.

3. Machines interconnectées selon une des revendications qui précèdent, **caractérisées en ce que** l'armoire électrique (62) centrale est réalisée en technique standard de montage en baies (système d'enfichage de cartes 19 pouces).

4. Machines interconnectées selon une des revendications qui précédent **caractérisées par** des emplacements libres dans l'armoire électrique centrale (62) permettant l'intégration d'autres composants pour les machines interconnectées.

5. Machines interconnectées selon une des revendications qui précèdent, **caractérisées par** l'intégration dans l'armoire centrale du robot (62) d'un automatisme à mémoire programmable par logiciel.

6. Machines interconnectées selon une des revendications qui précèdent, **caractérisées en ce que** l'armoire électrique centrale (62) soit munie d'une alimentation centrale électrique ininterrompue (65).

7. Machines interconnectées selon une des revendications qui précèdent, **caractérisées en ce que** l'armoire électrique centrale (62) est équipée d'un dispositif commun actif ou passif de dissipation de la chaleur (66).
